# EUROPEAN PATENT APPLICATION

(11) **EP 4 524 275 A1**
(43) Date of publication of application: **19.03.2025**
(21) Application number: 24739381.2
(22) Date of filing: 29.03.2024
(51) Int. Cl.: C22C 21/02, C22B 9/10, C22C 1/02, C22C 1/03

(54) **HIGH-STRENGTH AND HIGH-TOUGHNESS DIE-CASTING ALUMINUM ALLOY, AND PREPARATION METHOD THEREFOR AND USE THEREOF**

(71) Applicant: CITIC Dicastal Co., Ltd., Qinhuangdao, Hebei 066318 (CN); CITIC Limited, Qinhuangdao, Hebei 066318 (CN)
(72) Inventor: LI, Yongfei, Qinhuangdao, Hebei 066318 (CN); JIA, Chaohang, Qinhuangdao, Hebei 066318 (CN); LIU, Haifeng, Qinhuangdao, Hebei 066318 (CN); MA, Chao, Qinhuangdao, Hebei 066318 (CN); ZHANG, Xingming, Qinhuangdao, Hebei 066318 (CN); HE, Yanming, Qinhuangdao, Hebei 066318 (CN); WAN, Yachun, Qinhuangdao, Hebei 066318 (CN); LIU, Honglei, Qinhuangdao, Hebei 066318 (CN); LU, Hongzhou, Qinhuangdao, Hebei 066318 (CN)
(74) Representative: Chung, Hoi Kan
(86) International application number: PCT/CN2024/084774
(87) International publication number: WO 2024/188358

(57) **Abstract**

The disclosure relates to a high-strength and high-toughness die-cast aluminum alloy and preparation method therefor and application thereof, the alloy includes:7.0~9.5%of Si, 0.4~0.9% of Mn, 0.15~0.35% of Mg, 0.1~ 0.4% of Nb, 0.1~0.4% of V, 0.10~0.25% of Ti, 0.03~0.05% of Sr, no more than 0.30% of Fe, no more than 0.05% of inevitable impurities and the balance of Al. The alloy has high fluidity, excellent thermal cracking and mold sticking resistance, high-strength and elongation in the cast state, and higher mechanical properties and elongation of not less than 10% after heat treatment, meeting the performance requirements of automotive die-cast structural parts, and can be quickly changed in the existing die-cast production line, for no need to transform and upgrade existing melting and die-cast equipment, and reducing production costs.

## Description

### TECHNICAL FIELD

The present disclosure belongs to the field of metal materials, and particularly relates to a high-strength and high-toughness die-cast aluminum alloy, preparation method therefor and application thereof.

### BACKGROUND

With the increasingly fierce competition in the automobile market, major OEMs are developing in the direction of high quality, high reliability, lightweight, low emission and low cost. The vehicle lightweight and carbon emission requirements put forward many challenges for automotive parts and materials. The development and application of lightweight materials has become a key factor in improving the fuel efficiency of fuel powered vehicles and extending the cruising range of electric vehicles. Aluminum alloy has become the preferred material for automobile body due to its high specific strength, specific stiffness, high ductility and recyclability. In recent years, thanks to the implementation of lightweight development strategy and the rapid development of die casting equipment and process technology, the application of aluminum alloy die casting structural parts in the automobile body has become an important way of automobile lightening. At present, the die-cast aluminum alloy material represented by Silafont-36 (AlSi10MnMg) is the most commonly used die-cast structural parts for automobile bodies. Castings need to undergo T6 and T7 heat treatment in order to obtain high-strength and toughness performance. Castings are easily deformed in the heat treatment process to difficult to guarantee the size of complex castings with complex shapes, especially with large sizes, resulting in a reduction in the qualified rate of products and a further increase in production costs. At the same time, heat treatment itself is a high energy consumption process, which runs counter to the policy needs of energy conservation, environmental protection and low carbon emissions. Therefore, the development of die-cast aluminum alloy with high-strength and high-toughness in the as-cast state has important practical application value and commercial application prospect.

At present, heat treatment free die-cast aluminum alloys are mainly Al-Si-Mn series represented by C611, Castasil 37 and Al-Mg-Mn series alloys represented by Magsimal-59. Magsimal-59 alloy has high-strength and elongation in the as-cast state, but the shortcomings of the alloy such as poor castability, the obvious size effect of mechanical properties and easy to burn in melting limit its large-scale application in the field of automotive parts. Castasil 37 alloy does not contain Mg, so it does not have the age hardening effect, and has low strength and high elongation in the cast state, which is suitable for stressed structural parts with low strength requirements. C611 alloy has the characteristics of medium strength and high elongation in the cast state, and the yield strength can be further improved when it be treated under T5 treatment or baking treatment, but the elongation will be significantly reduced. Integrated large die casting is obtained by integrating multiple traditional stamping parts into a large casting, so it is required the casting characteristics and mechanical properties of the alloy be higher. On the one hand, the alloy is required to have high-strength and elongation in the as-cast state to meet the assembly needs of the automobile body; on the other hand, the casting is required to maintain a high elongation while improving the strength after painting and baking treatment to meet the collision safety needs of finished automobiles.

### SUMMARY

The purpose of the present disclosure is to solve, at least to a certain extent, one of the technical problems in the above-mentioned technology, and to provide a new kind of high-strength and high-toughness die-cast aluminum alloy material.

On the one hand, the present disclosure relates to a high-strength and high-toughness die-cast aluminum alloy, including the following components in percentage by weight: 7.0~9.5%of Si, 0.4~0.9% of Mn, 0.15~0.35% of Mg, 0.1~ 0.4% of Nb, 0.1~0.4% of V, 0.10~0.25% of Ti, 0.03~0.05% of Sr, no more than 0.30% of Fe, no more than 0.05% of inevitable impurities and the balance of Al.

According to one embodiment of the present disclosure, it is possibility that the ratio of the content of Nb to the content of V is 1:1.

According to one embodiment of the present disclosure, it is possibility that the inevitable impurities include P, Ca, Sn, Pb, Ni.

According to one embodiment of the present disclosure, it is possibility that the aluminum alloy is supported by 100% recycling of waste materials in factory.

On the second hand, the present disclosure relates to a method for preparing the above high-strength and high-toughness die-cast aluminum alloy, including:
a. pre-heating raw materials of Al, Si, Mn, Nb, V, Ti, Sr, and Mg weighed according weight ratio to 200°C to 250°C;
b. heating and melting the Al raw material in step a in the melting furnace, and controlling the temperature of liquid aluminum at 760°C to 780°C; then adding the Si, Nb, V and Mn in step a in order into the melting furnace to melt, and controlling the temperature of the liquid aluminum at 740°C to 760°C; finally, melting and stirring the Mg raw material in the melting furnace to obtain uniform alloy melt, and controlling the temperature of the liquid aluminum at 720°C to 740°C;
c. testing the composition of the melt obtained in step b, and transferring the melt into an insulation ladle after the composition is qualified; adding the Ti raw material and the Sr raw material; and controlling the melt temperature at 700°C to 720°C;
d. performing refining degassing after adding a refining agent into the alloy melt obtained in step c;
e. testing the composition and density equivalent of the alloy obtained in step d; placing the alloy melt for 30 minutes if the composition is within a design range;
f. die casting the alloy melt obtained in step e to obtain a high-strength and high-toughness die-cast aluminum alloy.

The above preparation method include preparation, handling and testing of alloy materials and production of castings (or cast samples), thus achieving the appropriate properties of the material/workpiece while efficiently integrating the production process.

According to one embodiment of the present disclosure, it is possibility that in step a, the Al raw material is pure aluminum raw material, Si raw material uses crystalline Si or Al-Si alloy, Mn raw material uses Al-Mn intermediate alloy, Nb raw material uses Al-Nb intermediate alloy, V raw material uses Al-V intermediate alloy, Ti raw material uses rod shaped Al-5Ti-B intermediate alloy, Sr raw material uses rod shaped Al-10Sr intermediate alloy, Mg raw material is pure magnesium block.

According to one embodiment of the present disclosure, it is possibility that in step b, the pure magnesium block is pressed into bottom area of the aluminum liquid with graphite bell jar to melt it completely, and obtain uniform alloy melt by stirring.

According to one embodiment of the present disclosure, it is possibility that in step d, the refining agent is a sodium-free refining agent, the addition quantity of the refining agent is 0.1% to 0.4% quantity of the total aluminum melt weight; the method of degassing is rotor degassing with a rotational speed of 400rpm to 600rpm, a degassing time of 8min to 15min; the gas was dry argon or nitrogen, a pressure of gas was 0.3-0.5MPa, a gas flow was 1.0-3.0 m³/h.

According to one embodiment of the present disclosure, it is possibility that the test qualified standard of the alloy melt in step e are: the percentage by weight of the alloy composition conforms to the above range of element composition; the density equivalent is no more than 1.7%.

According to one embodiment of the present disclosure, it is possibility that the die casting process parameters in step f are: a liquid aluminum pouring temperature is 660-690°C, a mold temperature is 140-180°C, a low speed filling speed is 0.15-0.35m /s, a high speed filling speed is 3.5-7.0m /s, a mold cavity vacuum degree is less than 80mbar, and a casting pressure is 30-50MPa.

On the third hand, the present disclosure relates to an application of the above high-strength and high-toughness die-cast aluminum alloy in a mechanical structure of vehicle.

According to one embodiment of the present disclosure, it is possibility that the mechanical structure of vehicle is a shock tower, a battery case, a car door or an integrated rear floor.

According to one embodiment of the present disclosure, it is possibility that the mechanical structure of the vehicle is obtained by die casting the high-strength and toughness die-cast aluminum alloy. Die casting process parameters in the process of die casting are: a liquid aluminum pouring temperature is 660-690°C, a mold temperature is 140-180°C, a low speed filling speed is 0.15-0.35m /s, a high speed filling speed is 3.5-7.0m /s, a mold cavity vacuum degree is less than 80mbar, and a casting pressure is 30-50MPa.

According to one embodiment of the present disclosure, it is possibility that waste materials of the high-strength and high-toughness die-cast aluminum alloy generated from the process of manufacturing the mechanical structure of the vehicle is 100% recycled in factory.

The functions of the elements involved in the high-strength and high-toughness die-cast aluminum alloy according to the disclosure are as follows:

Since the latent heat of crystallization of Si is 4.5 times that of aluminum alloy under the same volume, the Si in aluminum alloy can significantly improve the fluidity of the alloy and the strength of aluminum alloy. In the hypo eutectic Al-Si alloy, with the increase of Si content, the number of eutectic structure increases, the solidification interval of the alloy narrates, the fluidity of the alloy increases, but the toughness decreases at the same time. In order to ensure the fluidity and the high-strength and toughness of the die-casting alloy, the preferred content of Si element in the disclosure is controlled in the range of 7.0-8.5%.

Mg is in the casting Al-Si alloy. In the cooling and solidification process, Mg is dissolved into α-Al matrix to form solid solution strengthening to improve the strength of the alloy, and after the T5 heat treatment or coating baking treatment, Mg will occur precipitation strengthening to further improve the strength of the alloy. When the amount of Mg is more than 0.35%, the coarse Mg₂Si phase is easily formed at the grain boundary during the cooling and solidification process, which reduces the strength and elongation of the alloy.

Fe element can control the mold sticking tendency of the die-cast aluminum alloy, but in Al-Si die-cast aluminum alloy, only if the Fe content is more than 0.8%, Fe element can play the role of mold sticking resistance. At the same time, Fe element is easy to form a needle-like β-AlFeSi phase in the die-casting aluminum alloy, seriously cracks the aluminum alloy matrix, deteriorates the toughness and fatigue properties of the material. In order to ensure the strength and toughness of the alloy, the Fe content in aluminum alloy structural part is usually controlled below 0.20%. The high-strength and high-toughness die-cast aluminum alloy of the disclosure effectively inhibits the precipitation of β-AlFeSi phase, and the morphology of Fe phase is also significantly improved, so that the Fe content can be controlled in a higher range, that is, less than 0.30%.

The solid solubility of Mn in aluminum is greater than that of Fe, and the degree of segregation in aluminum alloy during solidification is small, so the probability of forming a brittle phase is less than that of Fe. On the one hand, Mn element can improve the morphology of Fe phase and transform the acicular β-AlFeSi phase into fish bone shaped or block iron phase α-Al(FeMn)Si phase, thereby improving the toughness of the alloy. On the other hand, Mn can increase the mold sticking resistance of the alloy, ensure the release of the alloy, and improve the life of the die-casting die.

Nb has a small solid solubility in Al matrix, and will form a fine Al3Nb phase during solidification. On the one hand, it plays the role of nailing grain boundaries to improve strength; on the other hand, it acts as a nucleating particle to promote grain nucleation and refine the matrix grains, then the strength and toughness of the material are improved, and the effective action range of Nb element is 0.1 ~ 0.4 %.

On the one hand, V element can refine α-Al (FeMn)Si phase, while synergistic effect with Mn element can effectively improve the morphology of Fe phase, and promote the acicular β-AlFeSi phase to transform into small massive α-Al (FeMnV)Si phase. On the other hand, V and Nb have a synergistic effect, which can refine the matrix grains and improve the strength and elongation of the alloy at room temperature and high temperature. The disclosure finds that when the addition amount of V exceeds 0.4%, the strength and elongation of the alloy will be reduced. When the ratio of Nb/V in the invention is 1:1, the effect of improving the strength and toughness of the alloy can be fully exerted.

Ti and B can refine the grain size to improve the strength and toughness of the alloy, and Ti can improve the mold sticking resistance of the alloy to prolong the life of the die. The disclosure finds that when the content of Ti element is controlled in 0.15 ~ 0.20%, it has a better comprehensive effect of adjusting the alloy viscosity and the micro-structure refinement.

Sr plays a chemical metamorphic role in the alloy, which changes the eutectic silicon phase from coarse and flaky to fibrous or short rod, and significantly improves the strength and toughness of the alloy. At the same time, Sr can improve the wettability between liquid aluminum and the die surface, reduce the mutual diffusion rate of Fe and Al atoms at the contact interface between liquid aluminum and the die, and improve the adhesive resistance of the alloy. However, with the increase of Sr content, the hydrogen absorption tendency of the melt increases, and the gas content in the alloy increases, which leads to the decrease of the properties of the alloy. The content of Sr in the disclosure is controlled in the range of 300~500ppm.

The disclosure provides a high-strength and high-toughness die-cast aluminum alloy and a preparation method therefor. Through the synergistic action of transition group elements Mn, Nb and V, the primary α-Al structure can be significantly refined, the solid solubility of α-Al can be increased, the solid solution strengthening effect can be improved, and the alloy can have high-strength and elongation in the as-cast state. Also can inhibit the precipitation of β-AlFeSi phase, improve the morphology of Fe phase, increase the strength and toughness of the alloy, reduce the mold sticking tendency of the alloy, and improve the die life; also can optimize the distribution of the second phase, and nano-sized Al(NbVTi)Si and Mg2Si strengthening phases can be dispersed in α-Al matrix after T5 or coating baking treatment, so that the strength of the alloy can be further improved to meet the performance requirements of integrated large-scale die-casting for alloy materials. At the same time, due to the effective suppression of the β-AlFeSi phase and the significant improvement of the Fe phase morphology, the alloy supports 100% recycling of waste in the factory, achieving closed-loop production, and thus significantly reducing production costs.

### BRIEF DESCRIPTION OF DRAWINGS

In order to more clearly illustrate the technical solutions of the embodiments of the present disclosure, the drawings used for illustrating the embodiments will be briefly described below. It should be understood that the following drawings merely illustrate some embodiments of the present disclosure and therefore should not be regarded as a limitation of the scope. For those of ordinary skill in the art, other drawings can be obtained according to these drawings without any creative work.
FIG. 1 shows a comparison of the mechanical properties of alloys in as-cast state between examples 1-4 and comparative examples 1-2 according to an embodiment of the present disclosure.
FIG. 2 shows a comparison of the mechanical properties of the alloy in the T5 heat treatment state of examples 1-4 and comparative example 1 according to an embodiment of the present disclosure.
FIG. 3 shows the metallographic micro-structure of the as-cast state of example 1 of the present disclosure.
FIG. 4 shows the metallographic micro-structure of the as-cast state of example 2 of the present disclosure.
FIG. 5 shows the metallographic micro-structure of the as-cast state of example 3 of the present disclosure.
FIG. 6 shows the metallographic micro-structure of the as-cast state of example 4 of the present disclosure.
FIG. 7 shows the metallographic micro-structure of the as-cast state of comparative example 1 of the present disclosure.
FIG. 8 shows the metallographic micro-structure of the as-cast state of comparative example 2 of the present disclosure.

### DETAILED DESCRIPTION OF THE EMBODIMENTS

The following description illustrates the technical scheme of the present disclosure so that persons skilled in the art can implement the present disclosure. The preferred embodiments described below are examples only, and those skilled in the art may obtain other obvious variations. The basic principles of the present disclosure as defined in the following description may be applied to other embodiments, deformation schemes, improvement schemes, equivalents and other technical schemes that do not deviate from the spirit and scope of the present disclosure. At the same time, it is worth noting that the features or characteristics described in conjunction with an embodiment are not necessarily limited to that particular embodiment, and are not meant to be mutually exclusive with other embodiments, and that different combinations of features in different embodiments may be considered within the competence of those skilled in the art.

Unless otherwise qualified, all terms used herein, both technical and scientific, have the same meaning as would normally be understood by a person of ordinary skill in the art and may be interpreted in the context of their relevant technical description. Where the specific conditions are not indicated in the embodiment, they shall be carried out in accordance with the usual conditions or those recommended by the manufacturer. The reagents or instruments used, whose manufacturer is not indicated, are conventional products that can be purchased through the market.

The invention is described in detail below with reference to the attached drawings and in conjunction with embodiments.

### Example 1

The embodiment of the present disclosure provides a high-strength and high-toughness die-cast aluminum alloy. The aluminum alloy is composed of the following elements by weight: 7.0% of Si, 0.60% of Mn, 0.25% of Mg, 0.20% of Nb, 0.20% of V, 0.15% of Ti, 0.030% of Sr, no more than 0.30% of Fe, no more than 0.05% of inevitable impurities, and the balance of Al.

Preparation and die-casting processes for the high-strength and high-toughness aluminum alloy of the embodiment includes the following steps:
a. calculating the weight of each material required based on the expected alloy composition, and pre-heating raw materials of pure Al, crystalline Si, an Al-Mn intermediate alloy, an Al-Nb intermediate alloy, an Al-V intermediate alloy, an Al-5Ti-B intermediate alloy, an Al-10Sr intermediate alloy, and pure Mg to 250°C;
b. first, heating and melting the pure Al in step a in the melting furnace, and controlling the temperature of liquid aluminum at 780°C; then, adding the crystalline Si, the Al-Nb intermediate alloy, the Al-V intermediate alloy and the Al-Mn intermediate alloy in step a in order into the melting furnace to melt, and controlling the temperature of the liquid aluminum at 740°C; finally, pressing the pure magnesium raw material into bottom area of the aluminum liquid with graphite bell jar to melt it completely; after that, mechanical stirring to obtain uniform alloy melt, and controlling the temperature of the liquid aluminum at 730°C.
c. testing the composition of the melt described in step b, and transferring the melt into an insulation ladle after the composition is qualified; adding the Al-5Ti-B intermediate alloy and the Al-10Sr intermediate alloy with rod-shape described in step a, the adding weight is 3% and 0.3% of the total melt weight respectively; and controlling the melt temperature at 720°C;
d. performing rotor degassing after adding a sodium-free refining agent of 0.2% of the total melt weight into the alloy melt obtained in step c with a rotational speed of 580rpm and a degassing time of 10min. The gas was dry, high-purity argon, and the pressure of argon was 0.35MPa, the gas flow was 2.5 m³/h, the temperature of liquid aluminum was controlled at 700°C.
e. testing the composition and density equivalent of the alloy obtained in step d. The test qualified standard are as follows: the composition is within the design range, the density equivalent is 1.5%; controlling the temperature of the liquid aluminum at 690°C after the liquid aluminum is placed for 30 minutes;
f. die casting the alloy melt obtained in step e to obtain a size of 300*500*3mm (width * length * thickness) flat for plate sample; a liquid aluminum pouring temperature is 670°C, a mold temperature is 150°C, a low speed filling speed is 0.2m /s, a high speed filling speed is 4.2m /s, a mold cavity vacuum degree is 80mbar, and a casting pressure is 40MPa.

### Example 2

The embodiment of the present disclosure provides a high-strength and high-toughness die-cast aluminum alloy. The aluminum alloy is composed of the following elements by weight: 7.5% of Si, 0.60% of Mn, 0.25% of Mg, 0.20% of Nb, 0.20% of V, 0.15% of Ti, 0.030% of Sr, no more than 0.30% of Fe, no more than 0.05% of inevitable impurities, and the balance of Al.

Preparation and die-casting processes for the high-strength and high-toughness aluminum alloy of the embodiment includes the following steps:
a. calculating the weight of each material required based on the expected alloy composition, and pre-heating raw materials of pure Al, crystalline Si, an Al-Mn intermediate alloy, an Al-Nb intermediate alloy, an Al-V intermediate alloy, an Al-5Ti-B intermediate alloy, an Al-10Sr intermediate alloy, and pure Mg to 250°C;
b. first, heating and melting the pure Al in step a in the melting furnace, and controlling the temperature of liquid aluminum at 780°C; then, adding the crystalline Si, the Al-Nb intermediate alloy, the Al-V intermediate alloy and the Al-Mn intermediate alloy in step a in order into the melting furnace to melt, and controlling the temperature of the liquid aluminum at 740°C; finally, pressing the pure magnesium raw material into bottom area of the aluminum liquid with graphite bell jar to melt it completely; after that, mechanical stirring to obtain uniform alloy melt, and controlling the temperature of the liquid aluminum at 730°C.
c. testing the composition of the melt described in step b, and transferring the melt into an insulation ladle after the composition is qualified; adding the Al-5Ti-B intermediate alloy and the Al-10Sr intermediate alloy with rod-shape described in step a, the adding weight is 3% and 0.3% of the total melt weight respectively; and controlling the melt temperature at 720°C;
d. performing rotor degassing after adding a sodium-free refining agent of 0.2% of the total melt weight into the alloy melt obtained in step c with a rotational speed of 580rpm and a degassing time of 10min. The gas was dry, high-purity argon, and the pressure of argon was 0.35MPa, the gas flow was 2.5 m³/h, the temperature of liquid aluminum was controlled at 700°C.
e. testing the composition and density equivalent of the alloy obtained in step d. The test qualified standard are as follows: the composition is within the design range, the density equivalent is 1.6%; controlling the temperature of the liquid aluminum at 690°C after the liquid aluminum is placed for 30 minutes;
f. die casting the alloy melt obtained in step e to obtain a size of 300*500*3mm (width * length * thickness) flat for plate sample; a liquid aluminum pouring temperature is 670°C, a mold temperature is 150°C, a low speed filling speed is 0.2m /s, a high speed filling speed is 4.2m /s, a mold cavity vacuum degree is 80mbar, and a casting pressure is 40MPa.

### Example 3

The embodiment of the present disclosure provides a high-strength and high-toughness die-cast aluminum alloy. The aluminum alloy is composed of the following elements by weight: 8.0% of Si, 0.6% of Mn, 0.25% of Mg, 0.15% of Nb, 0.15% of V, 0.15% of Ti, 0.030% of Sr, no more than 0.30% of Fe, no more than 0.05% of inevitable impurities, and the balance of Al.

Preparation and die-casting processes for the high-strength and high-toughness aluminum alloy of the embodiment includes the following steps:
a. calculating the weight of each material required based on the expected alloy composition, and pre-heating raw materials of pure Al, crystalline Si, an Al-Mn intermediate alloy, an Al-Nb intermediate alloy, an Al-V intermediate alloy, an Al-5Ti-B intermediate alloy, an Al-10Sr intermediate alloy, and pure Mg to 250°C;
b. first, heating and melting the pure Al in step a in the melting furnace, and controlling the temperature of liquid aluminum at 780°C; then, adding the crystalline Si, the Al-Nb intermediate alloy, the Al-V intermediate alloy and the Al-Mn intermediate alloy in step a in order into the melting furnace to melt, and controlling the temperature of the liquid aluminum at 740°C; finally, pressing the pure magnesium raw material into bottom area of the aluminum liquid with graphite bell jar to melt it completely; after that, mechanical stirring to obtain uniform alloy melt, and controlling the temperature of the liquid aluminum at 730°C.
c. testing the composition of the melt described in step b, and transferring the melt into an insulation ladle after the composition is qualified; adding the Al-5Ti-B intermediate alloy and the Al-10Sr intermediate alloy with rod-shape described in step a, the adding weight is 3% and 0.3% of the total melt weight respectively; and controlling the melt temperature at 720°C;
d. performing rotor degassing after adding sodium-free refining agent of 0.2% of the total melt weight into the alloy melt obtained in step c with a rotational speed of 580rpm and a degassing time of 10min. The gas was dry, high-purity argon, and the pressure of argon was 0.35MPa, the gas flow was 2.5 m³/h, the temperature of liquid aluminum was controlled at 700°C.
e. testing the composition and density equivalent of the alloy obtained in step d. The test qualified standard are as follows: the composition is within the design range, the density equivalent is 1.6%; controlling the temperature of the liquid aluminum at 690°C after the liquid aluminum is placed for 30 minutes;
f. die casting the alloy melt obtained in step e to obtain a size of 300*500*3mm (width * length * thickness) flat for plate sample; a liquid aluminum pouring temperature is 670°C, a mold temperature is 150°C, a low speed filling speed is 0.2m /s, a high speed filling speed is 4.2m /s, a mold cavity vacuum degree is 80mbar, and a casting pressure is 40MPa.

### Example 4

The embodiment of the present disclosure provides a high-strength and high-toughness die-cast aluminum alloy. The aluminum alloy is composed of the following elements by weight: 8.5% of Si, 0.6% of Mn, 0.25% of Mg, 0.15% of Nb, 0.15% of V, 0.15% of Ti, 0.030% of Sr, no more than 0.30% of Fe, no more than 0.05% of inevitable impurities, and the balance of Al.

Preparation and die-casting processes for the high-strength and high-toughness aluminum alloy of the embodiment includes the following steps:
a. calculating the weight of each material required based on the expected alloy composition, and pre-heating raw materials of pure Al, crystalline Si, an Al-Mn intermediate alloy, an Al-Nb intermediate alloy, an Al-V intermediate alloy, an Al-5Ti-B intermediate alloy, an Al-10Sr intermediate alloy, and pure Mg to 250°C;
b. first, heating and melting the pure Al in step a in the melting furnace, and controlling the temperature of liquid aluminum at 780°C; then, adding the crystalline Si, the Al-Nb intermediate alloy, the Al-V intermediate alloy and the Al-Mn intermediate alloy in step a in order into the melting furnace to melt, and controlling the temperature of the liquid aluminum at 740°C; finally, pressing the pure magnesium raw material into bottom area of the aluminum liquid with graphite bell jar to melt it completely; after that, mechanical stirring to obtain uniform alloy melt, and controlling the temperature of the liquid aluminum at 730°C.
c. testing the composition of the melt described in step b, and transferring the melt into an insulation ladle after the composition is qualified; adding the Al-5Ti-B intermediate alloy and the Al-10Sr intermediate alloy with rod-shape described in step a, the adding weight is 3% and 0.3% of the total melt weight respectively; and controlling the melt temperature at 720°C;
d. performing rotor degassing after adding sodium-free refining agent of 0.2% of the total melt weight into the alloy melt obtained in step c with a rotational speed of 580rpm and a degassing time of 10min. The gas was dry, high-purity argon, and the pressure of argon was 0.35MPa, the gas flow was 2.5 m³/h, the temperature of liquid aluminum was controlled at 700°C.
e. testing the composition and density equivalent of the alloy obtained in step d. The test qualified standard are as follows: the composition is within the design range, the density equivalent is 1.7%; controlling the temperature of the liquid aluminum at 690°C after the liquid aluminum is placed for 30 minutes;
f. die casting the alloy melt obtained in step e to obtain a size of 300*500*3mm (width * length * thickness) flat for plate sample; a liquid aluminum pouring temperature is 670°C, a mold temperature is 150°C, a low speed filling speed is 0.2m /s, a high speed filling speed is 4.2m /s, a mold cavity vacuum degree is 80mbar, and a casting pressure is 40MPa.

### Comparative example 1

The embodiment of the present disclosure provides a non-heat-treatable die-cast aluminum alloy (C611). The aluminum alloy is composed of the following elements by weight: 7.0% of Si, 0.6% of Mn, 0.25% of Mg, 0.15% of Ti, 0.015% of Sr, no more than 0.15% of Fe, no more than 0.05% of inevitable impurities, and the balance of Al.

Preparation and die-casting processes for the non-heat-treatable die-cast aluminum alloy of the comparative embodiment includes the following steps:
a. calculating the weight of each material required based on the expected alloy composition, and pre-heating raw materials of pure Al, crystalline Si, an Al-Mn intermediate alloy, an Al-5Ti-B intermediate alloy, an Al-10Sr intermediate alloy, and pure Mg to 250°C;
b. first, heating and melting the pure Al in step a in the melting furnace, and controlling the temperature of liquid aluminum at 780°C; then, adding the crystalline Si and the Al-Mn intermediate alloy in step a in order into the melting furnace to melt, and controlling the temperature of the liquid aluminum at 740°C; finally, pressing the pure magnesium raw material into bottom area of the aluminum liquid with graphite bell jar to melt it completely; after that, mechanical stirring to obtain uniform alloy melt, and controlling the temperature of the liquid aluminum at 730°C.
c. testing the composition of the melt described in step b, and transferring the melt into an insulation ladle after the composition is qualified; adding the Al-5Ti-B intermediate alloy and the Al-10Sr intermediate alloy with rod-shape described in step a, the adding weight is 3% and 0.3% of the total melt weight respectively; and controlling the melt temperature at 720°C;
d. performing rotor degassing after adding sodium-free refining agent of 0.2% of the total melt weight into the alloy melt obtained in step c with a rotational speed of 580rpm and a degassing time of 10min. The gas was dry, high-purity argon, and the pressure of argon was 0.35MPa, the gas flow was 2.5 m³/h, the temperature of liquid aluminum was controlled at 700°C.
e. testing the composition and density equivalent of the alloy obtained in step d. The test qualified standard are as follows: the composition is within the design range, the density equivalent is 1.5%; controlling the temperature of the liquid aluminum at 690°C after the liquid aluminum is placed for 30 minutes;
f. die casting the alloy melt obtained in step e to obtain a size of 300*500*3mm (width * length * thickness) flat for plate sample; a liquid aluminum pouring temperature is 670°C, a mold temperature is 150°C, a low speed filling speed is 0.2m /s, a high speed filling speed is 4.2m /s, a mold cavity vacuum degree is 80mbar, and a casting pressure is 40MPa.

### Comparative example 2

The embodiment of the present disclosure provides a non-heat-treatable die-cast aluminum alloy (Castasil 37). The aluminum alloy is composed of the following elements by weight: 9.0% of Si, 0.6% of Mn, 0.20% of Mo, 0.20% of Zr, 0.015% of Sr, no more than 0.15% of Fe, no more than 0.05% of inevitable impurities, and the balance of Al.

Preparation and die-casting processes for the non-heat-treatable die-castaluminum alloy of the comparative embodiment includes the following steps:
a. calculating the weight of each material required based on the expected alloy composition, and pre-heating raw materials of pure Al, crystalline Si, an Al-Mn intermediate alloy, an Al-Zr intermediate alloy, an Al-Mo intermediate alloy, and an Al-10Sr intermediate alloy to 250°C;
b. first, heating and melting the pure Al in step a in the melting furnace, and controlling the temperature of liquid aluminum at 780°C; then, adding the crystalline Si, the Al-Zr intermediate alloy, the Al-Mo intermediate alloy and the Al-Mn intermediate alloy in step a in order into the melting furnace to melt, and controlling the temperature of the liquid aluminum at 740°C; mechanical stirring to obtain uniform alloy melt, and controlling the temperature of the liquid aluminum at 730°C.
c. testing the composition of the melt described in step b, and transferring the melt into an insulation ladle after the composition is qualified; adding the Al-10Sr intermediate alloy with rod-shape described in step a, the adding weight is 0.15% of the total melt weight respectively; and controlling the melt temperature at 720°C;
d. performing rotor degassing after adding sodium-free refining agent of 0.2% of the total melt weight into the alloy melt obtained in step c with a rotational speed of 580rpm and a degassing time of 10min. The gas was dry, high-purity argon, and the pressure of argon was 0.35MPa, the gas flow was 2.5 m³/h, the temperature of liquid aluminum was controlled at 700°C.
e. testing the composition and density equivalent of the alloy obtained in step d. The test qualified standard are as follows: the composition is within the design range, the density equivalent is 1.6%; controlling the temperature of the liquid aluminum at 690°C after the liquid aluminum is placed for 30 minutes;
f. die casting the alloy melt obtained in step e to obtain a size of 300*500*3mm (width * length * thickness) flat for plate sample; a liquid aluminum pouring temperature is 670°C, a mold temperature is 150°C, a low speed filling speed is 0.2m /s, a high speed filling speed is 4.2m /s, a mold cavity vacuum degree is 80mbar, and a casting pressure is 40MPa.

The samples obtained by die-casting were subjected to T5 heat treatment, and the heat treatment was carried out in a box-type resistance furnace. The samples were raised to the set temperature of 200°C with the furnace, and the heating time was 10min. After the temperature was reached, the samples were held for 90min and then were kept in the air for cooling. Comparison example 2 is non-heat treatment strengthened alloy without T5 heat treatment. Tensile specimens with a thickness of 3mm are taken from the samples by die casting far away from the gate end according to GB/T 228.1-2021 standard for mechanical properties testing. Table 1 shows the measured alloy composition of examples and comparative examples.

**Table 1 Chemical composition of examples and comparative examples**

| elements | Si | Fe | Mn | Mg | Nb | V | Mo | Zr | Ti | Sr | Al |
|---|---|---|---|---|---|---|---|---|---|---|---|
| example 1 | 6.982 | 0.272 | 0.598 | 0.245 | 0.192 | 0.201 | -- | -- | 0.145 | 0.029 | balance |
| example 2 | 7.491 | 0.269 | 0.605 | 0.242 | 0.195 | 0.199 | -- | -- | 0.153 | 0.030 | balance |
| example 3 | 8.023 | 0.270 | 0.586 | 0.246 | 0.154 | 0.153 | -- | -- | 0.152 | 0.031 | balance |
| example 4 | 8.581 | 0.268 | 0.600 | 0.245 | 0.150 | 0.149 | -- | -- | 0.159 | 0.028 | balance |
| comparative example 1 | 6.912 | 0.149 | 0.612 | 0.251 | -- | -- | -- | -- | 0.155 | 0.014 | balance |
| comparative example 2 | 9.050 | 0.150 | 0.608 | -- | -- | -- | 0.210 | 0.196 | -- | 0.016 | balance |

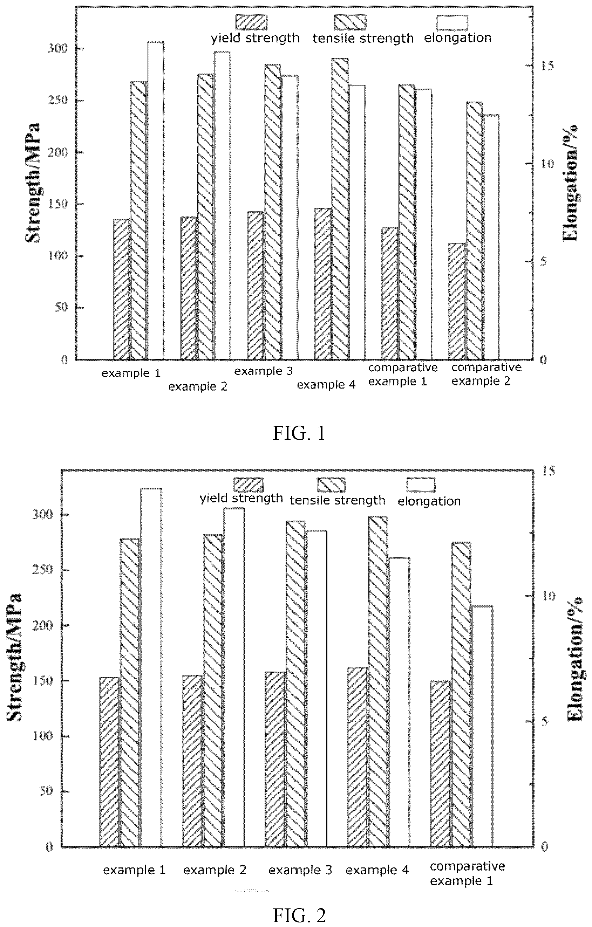

FIG. 1 shows the mechanical property results of the examples and comparative examples of the present disclosure of the alloy in the cast state. It can be seen from the examples provided by the present disclosure that the yield strength of the alloy in the as-cast state is equal to or greater than 135MPa, the tensile strength is equal to or greater than 270MPa and the elongation is equal to or greater than 14%, within the composition range of different Si contents, and comprehensive properties of the alloy are better than the mechanical properties of C611 and Castasil 37 alloys in as-cast state. FIG. 2 shows the mechanical property results of the examples and comparative examples of the present disclosure of the alloy in the T5 heat treatment state of the disclosure. It can be seen that after heat treatment, the yield strength of C611 alloy increases, the tensile strength does not increase significantly, and the elongation is less than 10%, which decreases by about 30% compared with the as-cast state. For the examples of the disclosure, after heat treatment, the yield strength of the alloy is further increased (greater than 150MPa), the tensile strength is not significantly increased, and the elongation is also reduced to varying degrees, but all alloys maintain a high elongation of greater than 11.5%, and the comprehensive mechanical properties of the alloy are superior to C611 alloy. Meet the requirements of high-strength and high elongation of integrated large castings in alloy casting and coating baking state.

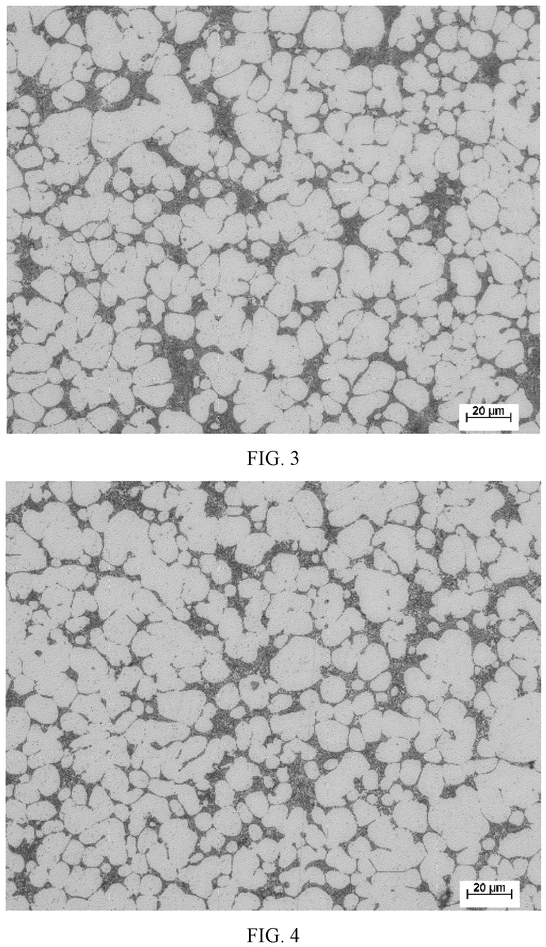

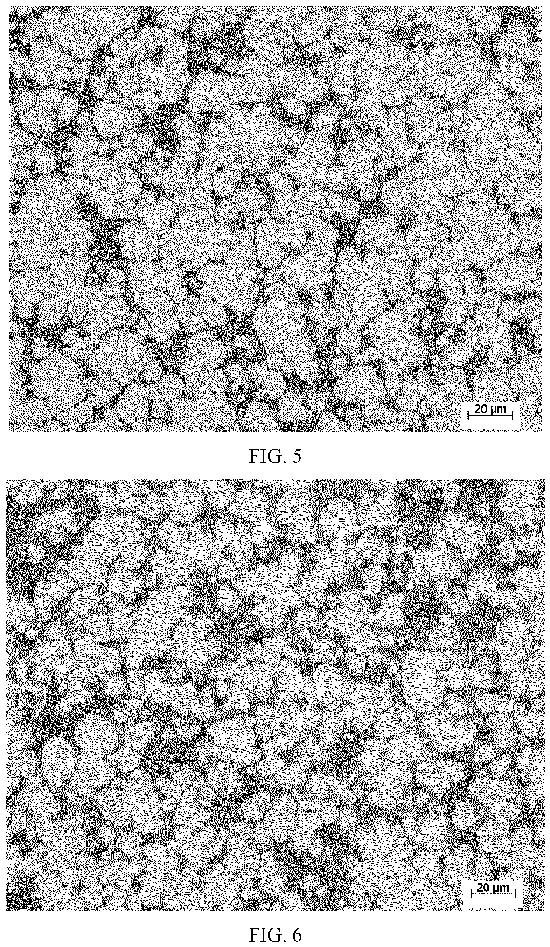

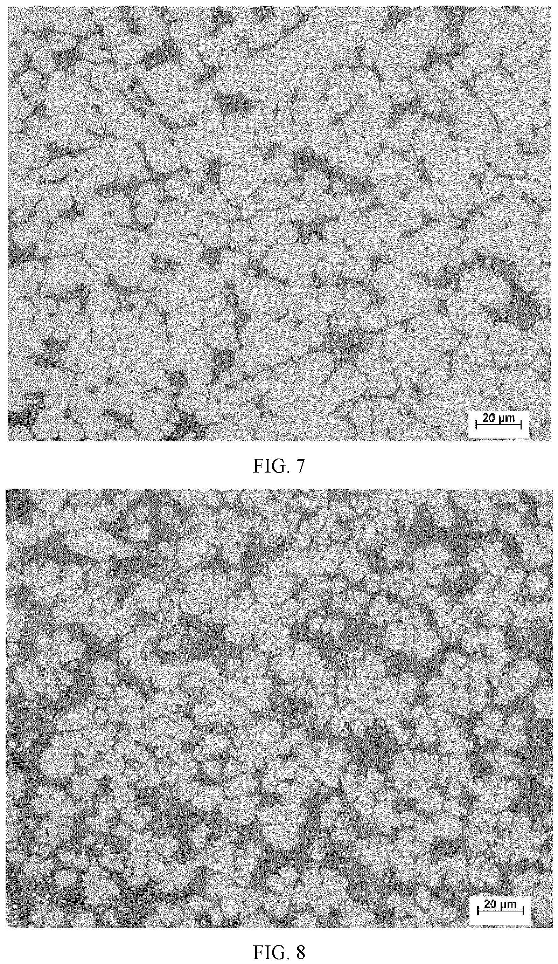

FIG. 3, 4, 5, and 6 are correspond to the metallographic micro-structure of examples 1, 2, 3, and 4 respectively, while FIG. 7 and FIG. 8 show the metallographic micro-structure of comparative examples 1 and 2 respectively. Compared with C611 and Castasil 37 alloys, it can be found that after the introduction of transition group alloy elements Nb and V, through the synergistic effect of Nb and V elements, the grain size of the matrix alloy is finer, so the effect of fine grain strengthening and grain boundary strengthening is more obvious, which is more beneficial to the improvement of the strength and toughness of the alloy.

The disclosure provides a new die-cast aluminum alloy with good casting performance and high-strength and toughness both in the as-cast state and in the T5 heat treatment or in coating baking state. The alloy shows high fluidity, excellent thermal cracking resistance and mold sticking resistance, high-strength and elongation in the as-cast state. After heat treatment, the alloy has higher mechanical properties and elongation of not less than 10%, which meets the existing industrial production requirements, especially the performance requirements of die-cast structural parts for automobiles. Fast switching of alloys on existing die casting lines eliminates the need to retrofit and upgrade existing melting and die-casting equipment, while supporting 100% in-plant waste recovery, thereby effectively reducing production costs.

The above description is only a better implementation of this application and an explanation of the technical principles used, and is not intended to limit the protection range of the disclosure. Persons skilled in the art shall understand that the scope of invention referred to this application shall not be limited to technical solutions resulting from particular combinations of the above components and method features, but shall also cover other technical solutions resulting from any combination of the above technical features or their equivalents without leaving the idea of the disclosure.

## Claims

1. A high-strength and high-toughness die-cast aluminum alloy, comprising the following components in percentage by weight: 7.0~7.5% or 8.0~8.5% of Si, 0.4% or 0.6% or 0.9% of Mn, 0.15~0.25% of Mg, 0.15% or 0.2% of Nb, 0.15% or 0.2% of V, 0.15% of Ti, 0.03% of Sr, no more than 0.30% of Fe, no more than 0.05% of inevitable impurities and the balance of Al,
the inevitable impurities comprising P, Ca, Sn, Pb, Ni;
the ratio of the content of Nb to the content of V being 1: 1;
the high-strength and high-toughness die-cast aluminum alloy being prepared by a method of:
a. pre-heating raw materials of Al, Si, Mn, Nb, V, Ti, Sr, and Mg weighed according weight ratio to 200°C to 250°C;
b. heating and melting the Al raw material in step a in the melting furnace, and controlling the temperature of liquid aluminum at 760°C to 780°C; then adding the Si, Nb, V and Mn in step a in order into the melting furnace to melt, and controlling the temperature of the liquid aluminum at 740°C to 760°C; finally, melting and stirring the Mg raw material in the melting furnace to obtain uniform alloy melt, and controlling the temperature of the liquid aluminum at 720°C to 740°C;
c. testing the composition of the melt obtained in step b, and transferring the melt into an insulation ladle after the composition is qualified; adding the Ti raw material and the Sr raw material; and controlling the melt temperature at 700°C to 720°C;
d. performing refining degassing after adding a refining agent into the alloy melt obtained in step c;
e. testing the composition and density equivalent of the alloy obtained in step d; placing the alloy melt for 30 minutes if the composition is within a design range;
f. die casting the alloy melt obtained in step e to obtain a high-strength and high-toughness die-cast aluminum alloy;
wherein Nb forms Al₃Nb phase in the Al matrix, which plays the role of nailing grain boundaries to improve the strength, and also acts as a nucleating particle to promote grain nucleation and refine the matrix grains to improve the strength and toughness of the material;
V and Mn work together to promote the conversion of acicular β-AlFeSi phase to α-Al (FeMnV)Si phase to improve the toughness of the alloy.

2. The high-strength and high-toughness die-cast aluminum alloy of Claim 1, wherein the aluminum alloy is supported by 100% recycling of waste materials in factory.

3. A method for preparing a high-strength and high-toughness die-cast aluminum alloy according to claim 1 or 2, comprising:
a. pre-heating raw materials of Al, Si, Mn, Nb, V, Ti, Sr, and Mg weighed according weight ratio to 200°C to 250°C;
b. heating and melting the Al raw material in step a in the melting furnace, and controlling the temperature of liquid aluminum at 760°C to 780°C; then adding the Si, Nb, V and Mn in step a in order into the melting furnace to melt, and controlling the temperature of the liquid aluminum at 740°C to 760°C; finally, melting and stirring the Mg raw material in the melting furnace to obtain uniform alloy melt, and controlling the temperature of the liquid aluminum at 720°C to 740°C;
c. testing the composition of the melt obtained in step b, and transferring the melt into an insulation ladle after the composition is qualified; adding the Ti raw material and the Sr raw material; and controlling the melt temperature at 700°C to 720°C;
d. performing refining degassing after adding a refining agent into the alloy melt obtained in step c;
e. testing the composition and density equivalent of the alloy obtained in step d; placing the alloy melt for 30 minutes if the composition is within a design range;
f. die casting the alloy melt obtained in step e to obtain a high-strength and high-toughness die-cast aluminum alloy.

4. The method of claim 3, wherein the Al raw material is pure aluminum raw material, Si raw material uses crystalline Si or Al-Si alloy, Mn raw material uses Al-Mn intermediate alloy, Nb raw material uses Al-Nb intermediate alloy, V raw material uses Al-V intermediate alloy, Ti raw material uses rod shaped Al-5Ti-B intermediate alloy, Sr raw material uses rod shaped Al-10Sr intermediate alloy, Mg raw material is pure magnesium block.

5. The method of claim 3, wherein the refining agent in step d is a sodium-free refining agent, the addition quantity of the refining agent is 0.1% to 0.4% quantity of the total aluminum melt weight; the method of degassing is rotor degassing with a rotational speed of 400rpm to 600rpm, a degassing time of 8min to 15min; the gas was dry argon or nitrogen, a pressure of gas was 0.3-0.5MPa, a gas flow was 1.0-3.0 m³/h.

6. The method of claim 3, wherein the test qualified standard of the alloy melt in step e are: the percentage by weight of the alloy composition conforms to the range of element composition in Claim 1, the density equivalent is no more than 1.5%.

7. The method of claim 3, wherein the die casting process parameters in step f are: a liquid aluminum pouring temperature is 660-690°C, a mold temperature is 140-180°C, a low speed filling speed is 0.15-0.35m /s, a high speed filling speed is 3.5-7.0m /s, a mold cavity vacuum degree is less than 80mbar, and a casting pressure is 30-50MPa.

8. An application of the high-strength and high-toughness die-cast aluminum alloy according to claim 1 or 2 in a mechanical structure of vehicle.

9. The application of claim 8, wherein the mechanical structure of vehicle is a shock tower, a battery case, a car door or an integrated rear floor.

10. The application of claim 8 or claim 9, wherein the mechanical structure of the vehicle is obtained by die casting the high-strength and toughness die-cast aluminum alloy.

11. The application of claim 10, wherein die casting process parameters in the process of die casting are: a liquid aluminum pouring temperature is 660-690°C, a mold temperature is 140-180°C, a low speed filling speed is 0.15-0.35m /s, a high speed filling speed is 3.5-7.0m /s, a mold cavity vacuum degree is less than 80mbar, and a casting pressure is 30-50MPa.

12. The application of claim 8 or claim 9, wherein waste materials of the high-strength and high-toughness die-cast aluminum alloy generated from the process of manufacturing the mechanical structure of the vehicle is 100% recycled in factory.
